Europäisches Patentamt

European Patent Office

Office européen des brevets

(11) Publication number: **0 341 321**
**A2**

# EUROPEAN PATENT APPLICATION

(21) Application number: 87850252.5

(51) Int. Cl.4: **F16D 1/10**

(22) Date of filing: 06.11.87

(43) Date of publication of application:
15.11.89 Bulletin 89/46

(84) Designated Contracting States:
AT BE CH DE ES FR GB GR IT LI LU NL SE

(71) Applicant: IMK MAGNUSSON & CO
Box 110
S-694 01 Hallsberg(SE)

(72) Inventor: Karlsson, Bertil
Blomsterhultsgatan 19
S-694 00 Hallsberg(SE)

(74) Representative: Lautmann, Kurt O.
KURT LAUTMANNS PATENTBYRA AB Box
245
S-691 25 Karlskoga(SE)

(54) Locking device.

(57) A device for locking machining tools such as grinding wheels and saw blades to the associated drive shafts by means of the inner envelope surface of a unit (3) permanently secured to a drive shaft (11), and the outer envelope surface of a sleeve (1) acting as a holder for a grinder or saw blade, said envelope surfaces abutting or substantially abutting each other, the unit (3) being provided with cavities (9), each cavity containing a spring-actuated ball (6) which is able to partially protrude through a recess in the envelope surface of units (3).

EP 0 341 321 A2

## Locking device

The present invention relates to a locking device for machining tools such as grinders, saw blades and the like on a drive means such as the shaft of a motor. Such machining tools have hitherto been secured to the shaft by screw joints, for instance. Exchanging the such tools is thus extremely time-consuming.

The object of the present invention is to reduce the time required for exchanging tools to an absolute minimum. This is enabled by attaching a unit with an internal envelope surface to the drive shaft of a machining tool. This surface is intended to cooperate with the outer envelope surface of a body to be secured to the drive shaft. The inner surface is also provided with a number of cavities, each cavity being big enough to allow a pressure-actuated body to be caused to partially protrude through the associated recess.

Each pressure-actuated body in the unit is movable in a cavity in such a way that when the body with the outer envelope surface is applied to the inner envelope surface, the pressure-actuated body will acquire a component of movement in a direction coinciding with the direction of application of the body with the outer envelope surface. The pressure-actuated body also acquires an outwardly directed radial component of movement. The direction of this latter component will be reverse if an attempt is made to remove the body with the external envelope surface.

To enable rapid release of the two surfaces from each other a member is required according to the invention, which accords each pressure-actuated body a contrary movement, thus disengaging the surfaces almost instantaneously.

According to an advantageous embodiment of the invention, said member consists of a ring penetrating into the inner peripheral surface along its periphery, having a peripheral surface which partially closes the open end of each cavity. The peripheral surface of said ring is such that when the ring is turned about its central axis, the pressure-actuated body can be accorded a movement against the pressure-actuation so that the body leaves the recess into which it is being forced.

According to an advantageous embodiment of the invention, the peripheral surface of the ring may be provided with a radial groove which preferably decreases in depth from its mid-point.

According to the invention additional means are provided to continuously strive to turn the ring to a position in which the pressure-actuated bodies are able to protrude into the respective recesses, thus effecting a locking function. Said means consist of radial grooves in the peripheral surface of the ring, each groove decreasing in depth from its mid-point, and each groove cooperating with a body pressure-influenced in a direction towards the groove, this direction being perpendicular to the peripheral surface. Bodies of this type are suitably arranged in the unit with the internal peripheral surface.

The invention will be described in the following with reference to the accompanying drawings in which

Figure 1 shows a body with an outer envelope surface and a unit with an inner envelope surface locked together with the aid of a pressure-actuated body with axial and radial components of movement,

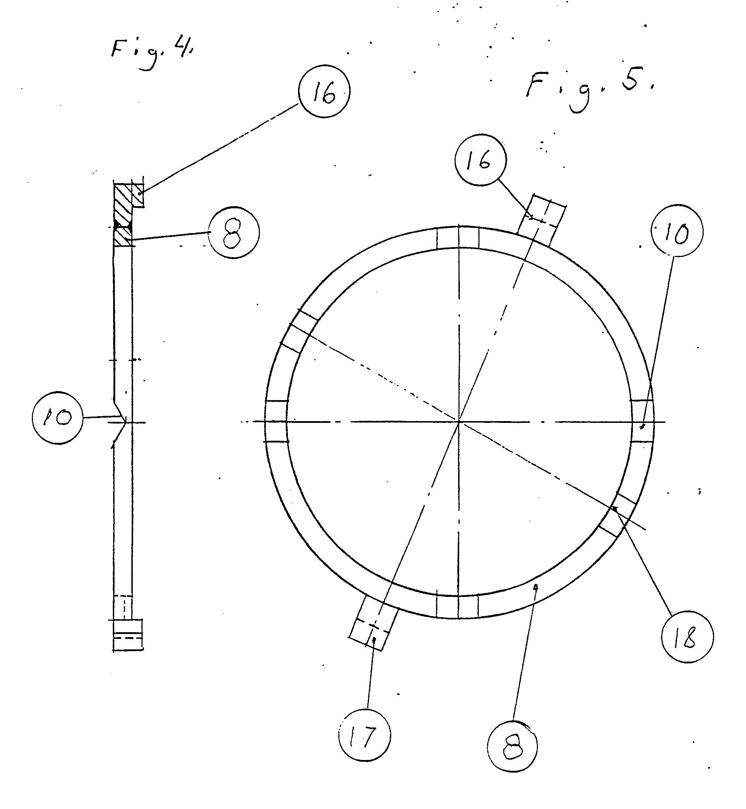

Figures 2 and 3 show two different sections through the unit with the inner envelope surface and

Figures 4 and 5 show the peripheral ring of Figure 1 seen from below and in cross section.

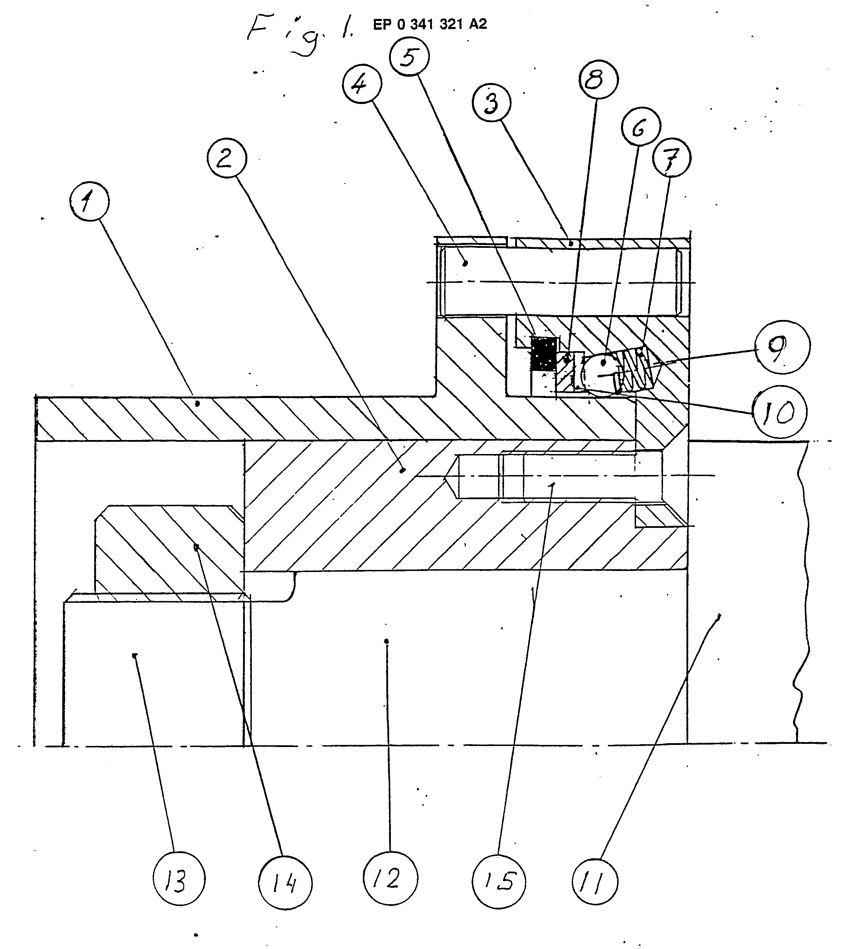

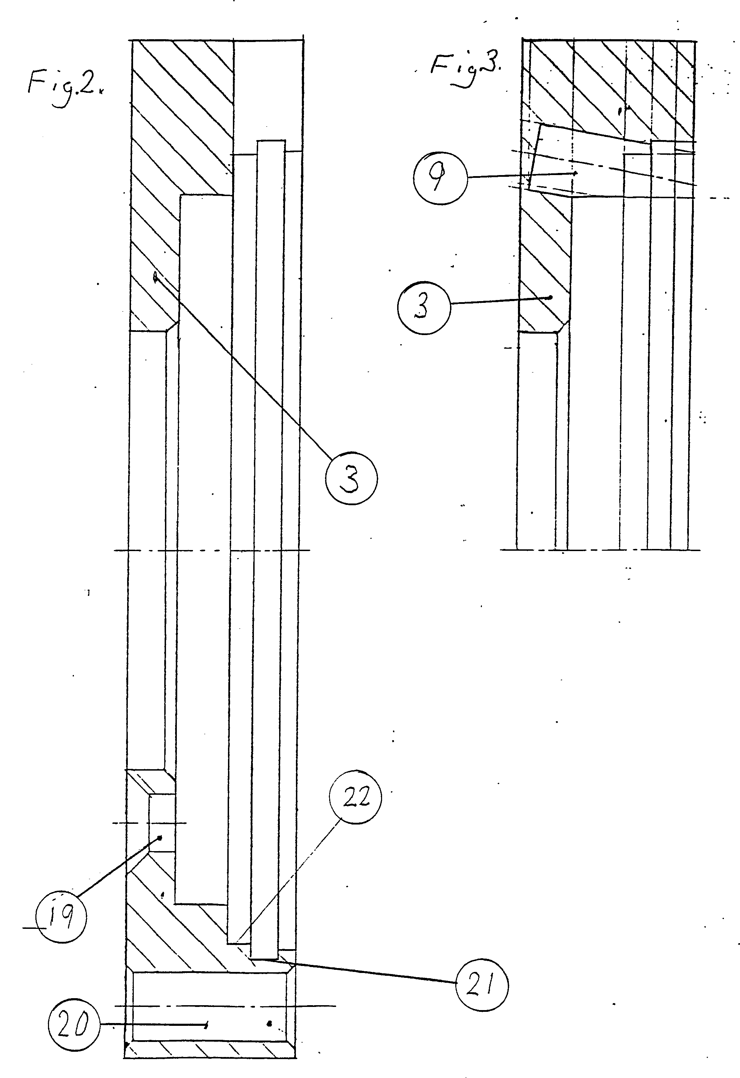

In Figure 1, 11 is the drive shaft of a motor of optional type. The shaft 11 is provided with a shaft extension 12, the shaft end 13 being tapped to cooperate with a nut 14. The shaft extension 12 is smaller in diameter than the shaft 11, thus providing a contact surface at the shaft 11 around the shaft extension 12. A sleeve 2 is applied on the shaft extension 12, one end abutting the contact surface of the shaft 11 and is kept clamped against this surface by the nut 14. A peripheral ring is secured to the sleeve 2 by means of one or more screws 15 passing through holes 19 in the peripheral ring. The peripheral ring 3 has an inner envelope surface clearly visible in Figure 2, where the left part of the envelope surface shall cooperate with part of the sleeve 2, and the following part of the envelope surface is intended to cooperate with the external envelope surface of a sleeve 1. These opposing envelope surfaces are intended to abut or substantially abut each other. After the last-mentioned envelope surface of the peripheral ring 3 follows a contact surface for a grooved ring 8 and, following the grooved ring, a spring-actuated locking ring 5 which retains the grooved ring 8 in the peripheral ring 3. The peripheral ring 3 is provided with a plurality of cavities 9. The central axis of each cavity lies in a plane passing through the central axis of the peripheral ring 3. The central axis of each cavity 9 forms an acute angle with the central axis of the peripheral ring 3. Each cavity has a bottom and, in contact with the bottom, a helical spring 7. The other end of the spring 7 is in contact with a locking ball 6, the diameter of which corresponds substantially to that of the cavity. Each cavity has a recess in the envelope surface which is to cooperate with the envelope surface of the outer sleeve 1. This recess is smaller than the diameter of the ball 6. At its open end, each cavity 9 is sealed by the grooved ring 8. The ring is provided with a radial groove 10 for each ball 6 in a cavity 9. The groove is shown here with a purely triangular cross section. However, it is evident that the groove may be designed with decreasing depth from its mid-point. The grooved ring 8 can be turned about its central axis by means of two manually operated protrusions 16 and 17. When the grooved ring is turned, the balls 6 will either be in contact with the flat peripheral surface of the grooved ring 8, or they will be in contact with the walls of a groove 10. in the latter case the ball 6 protrudes out of the recess in the inner envelope surface of the peripheral ring 3. If, however, the ball is in contact with the peripheral surface of the ring, it will be pushed aside from said recess. In the present case the body 1 is assumed to have a cylindrical outer surface, but obviously the surface could form a polygon. This also applies to the inner envelope surface of the peripheral ring 3. A machining tool such as a grinder or saw blade is attached to the sleeve or body 1. The sleeve 1 has a peripheral flange provided with a number of holes for fingers 4 arranged in the peripheral ring 3.

The means described above functions as follows:

It is assumed that the sleeve 1 with machining tool is to be attached to the shaft 11, the sleeve 1 being applied on the sleeve 2 and turned until the fingers 4 fit into holes in the flange of the sleeve 1. it is also assumed that the position of the grooved ring is such that each ball 6 is in a groove 10. A part of the ball 6 thus protudes out through the recess in the inner envelope surface. As mentioned earlier, the recess has smaller diameter than the ball 6 and the ball cannot therefore pass fully out of the recess. Upon contact with the outer envelope surface of the sleeve 1, the ball 6 acquires components of movement in both axial and radially outward direction, and the sleeve can therefore be placed in the rest position indicated in the drawing. it is impossible to remove the tool with the grooved ring 8 in this position inasmuch as, if an attempt is made to remove the sleeve 1, each ball will acquire an axial and a radially inwardly directed component of movement. The latter component of movement locks the sleeve 1 so tightly to the peripheral ring 3 that forces in excess of 1 ton are required to remove the sleeve from the ring 3. This tight locking can be quickly released by turning the grooved ring 8 so that the balls 6 abut parts of the ring located outside the grooves. Thus, by turning the ring, a tool can be removed almost instantaneously from the drive shaft 11, and replaced by a different tool.

A means is also desirable which always strives to keep the grooved ring in such a position that a ball 6 is located in the associated groove 10. For this purpose the grooved ring 8 is provided with a number of grooves 18 cooperating with a spring-actuated ball, the ball cooperating only with the groove 18 and being accorded a force perpendicular to the grooved peripheral surface of the ring. Each groove 18 decreases in depth from its mid-point, its cross section suitably being triangular. Each ball cooperating with the last-mentioned grooves strives to turn the ring 8 so that the ball reaches the bottom of the groove. When this occurs, each ball 6 will also be at the bottom of the respective groove 10.

## Claims

1. A locking device for machining tools such as saw blades, grinders and the like where the tool is secured in a sleeve which can be fitted on or secured to a drive shaft, **characterised** by a unit (3) permanently secured to the drive shaft (11), the inner, axial, peripheral surface of said unit being intended to abut or substantially abut the outer envelope surface of said sleeve (1), by one or more bottomed cavities (9) in said unit (3), the longitudinal axis of each of said cavities (9) being situated in a plane through the central axis of the cooperating sleeve (1), said central axis and said longitudinal axis forming an acute angle with each other, by a body (6) such as a ball in each cavity (9), said body (6) being shaped to allow it to move along the longitudinal axis and immovable transversely in relation to said axis, by a member (7) such as a spring located between the bottom of the cavity (9) and the body (6), striving to remove the body (6) from the bottom of the cavity, and by a recess in the envelope surface of the unit (3) at each cavity (9), said recess communicating with its cavity (9) so that the body (6) is able to partially protrude through the recess.

2. A locking device according to claim 1, **characterised** in that the unit (3) has a ring (8) penetrating into its inner envelope surface, the axes of said ring (8) and of the cooperating sleeve (1) being common, and that the peripheral surface of said ring (8) partially closes the other end of each cavity (9).

3. A locking device according to claim 2, **characterised** in that said peripheral surface of the ring (8) is such that when the ring (8) is turned about its axis, the body (6) can either be prevented from protruding through said recess or be allowed to protrude through said recess.

4. A locking device according to claim 3, **characterised** in that for each cavity (9) with body (6), the peripheral surface of the ring (8) is provided with a radial groove (10) with preferably triangular cross section.

5. A locking device according to claim 3 or 4, **characterised** by a means striving to turn the ring (8) to the position in which the body (6) is able to protrude through the recess.

6. A locking device according to claim 5, **characterised** in that the member is formed by one or more radial grooves in a peripheral surface of the ring (8) and a pressure-influenced body, preferably a ball, for each groove, the pressure influence being directed at right angles to the peripheral surface, and the groove decreasing in depth from its mid-point.

EP 0 341 321 A2

Fig. 1.

Fig.2.

Fig.3.

3

9

3

22

19

21

20

Fig. 4.

Fig. 5.